# EUROPÄISCHE PATENTSCHRIFT

(11) **EP 1 494 048 B1**
(45) Veröffentlichungstag und Bekanntmachung des Hinweises auf die Patenterteilung: **07.11.2012**
(21) Anmeldenummer: 04013611.1
(22) Anmeldetag: 09.06.2004
(51) Int. Cl.: G01V 8/20, F16P 3/14, B23Q 5/58

(54) **Lichtgitter**
Light curtain
Rideau de lumière

(30) Priorität: 02.07.2003 DE 10329881
(43) Veröffentlichungstag der Anmeldung: 05.01.2005
(73) Patentinhaber: SICK AG, 79183 Waldkirch (DE)
(72) Erfinder: Beck, Michael, 79183 Waldkirch (DE); Rieger, Daniel, 79102 Freiburg (DE); Haberstroh, Frank, 79183 Waldkirch (DE)
(74) Vertreter: Manitz, Finsterwald & Partner GbR

(56) Entgegenhaltungen:
- CA-A- 1 093 192
- DE-A- 4 422 497
- DE-A- 4 424 537
- US-A- 4 430 568
- US-A- 5 065 418
- US-A- 5 243 183

## Beschreibung

Die Erfindung betrifft ein Lichtgitter mit einer Sendeleiste zum Aussenden einer Mehrzahl von Lichtstrahlen und einer Empfangsleiste zum Empfang dieser Lichtstrahlen, einer Auswerteeinheit zur Verarbeitung von in Abhängigkeit von den empfangenen Lichtstrahlen erzeugten Empfangssignalen, einem Speicher für Referenzwerte, die mittels der Auswerteeinheit mit den Empfangssignalen vergleichbar sind. Weiterhin betrifft die Erfindung ein Verfahren zum Betrieb eines solchen Lichtgitters.

Derartige Lichtgitter sind aus dem Stand der Technik bekannt und dienen beispielsweise dazu, flächig ausgedehnte Überwachungsbereiche bzw. Schutzfelder auf Eingriffe, beispielsweise durch Personen, zu überwachen und beim Eingriff durch eine Person ein Steuersignal zu generieren, das zum Beispiel zum Abschalten einer Maschine führt, welche bewegte Teile aufweist, die die in den Überwachungsbereich eingreifende Person gefährden könnten. Dabei ist der Einsatz eines Lichtgitters im Bereich jeglicher Art von Maschinen denkbar, von denen beliebige Arten von Gefährdungen ausgehen können.

Aus der deutschen Patentschrift DE 44 22 497 C2 ist ein Lichtgitter bekannt, welches nicht grundsätzlich zu einem Abschalten einer Maschine führt, wenn ein Objekt oder eine Person in dessen Überwachungsbereich eingreift. Vielmehr ermöglicht es dieses bekannte Lichtgitter, eine feste zeitliche Folge von zulässigen Eingriffen in den Überwachungsbereich des Lichtgitters einzulernen, welche dann dementsprechend nicht zu einem Abschalten der Maschine führt. Auf diese Weise wird es möglich, dass beispielsweise im Rahmen eines Biegevorgangs ein Werkstück eine bestimmte Bewegung ausführt, bei der sich Teile des Werkstücks durch den Überwachungsbereich bewegen, ohne dass ein Abschalten der Maschine erfolgt.

Nachteilig bei diesem bekannten Lichtgitter ist die Tatsache, dass nur solche zulässigen Bewegungen eingelernt werden können, die in einer fest vorgegebenen zeitlichen Abfolge ablaufen.

Aus der DE 44 24 537 A 1 ist ein Lichtgitter der genannten Art bekannt, bei welchem zusätzlich der momentane Ort eines Objektes innerhalb eines Schutzfeldes verarbeitet wird.
Bei derartigen Anordnungen ist jedoch von Nachteil, dass in vielen Anwendungsfällen die Position des Objekts nicht mit ausreichender Genauigkeit feststellbar ist. Hinzu kommt, dass mit einem solchen bekannten Lichtgitter insbesondere auch senkrecht zur Objektförderrichtung verlaufende Objektkanten nicht exakt erkannt werden können.

Mit einer Vorrichtung gemäß DE 44 24 497 A1 können Objekte überwacht werden, die während eines definierten Zeitintervalls mit vorgegebener Geschwindigkeit entlang einer definierten Bahn im Überwachungsbereich geführt werden.

Die Druckschriften US-A-4 430 568 und US-A-5 065418 betreffen Röntgeninspektionssysteme, wobei US-A-4 430 568 Kameras zur Positionserkennung bewegter Objekte vorgesehen sind.

Bei den in den Dokumenten CA-A-1 093 192 und US-A5 243 183 offenbarten Lichtgittern wird die Anwesenheit eines zulässigen Objekts im Überwachungsbereich erlaubt. Auch eine Bewegung dieses Objekts führt nicht zwangsläufig zur Auslösung eines Signals, solange nicht mehr als eine vorbestimmte Anzahl von Empfängern abgeschattet wird.

Bei dem in DE 29 40 414 A1 offenbarten Verfahren kommen Lichtschranken zum Einsatz, die ein vorbeifahrendes Wasserfahrzeug abtasten, wobei vorausgesetzt wird, dass sich das Wasserfahrzeug mit gleich bleibender Geschwindigkeit fortbewegt.

Eine Aufgabe der vorliegenden Erfindung besteht darin, bei Lichtgittern, wie sie z.B. aus DE 44 24 537 A1 bekannt sind, die Genauigkeit der Objekterkennung zu verbessern.

Die Lösung der Aufgabe erfolgt durch eine Anordnung gemäß Anspruch 1.

Durch die erfindungsgemäße Ausbildung eines Lichtgitters ist es möglich, die konkrete Position eines Objektes im Überwachungsbereich zu ermitteln. Diese Objektpositionen können dann beim Vergleich der Referenzwerte mit den Empfangssignalen berücksichtigt werden. Konkret ist es möglich, den gespeicherten Referenzwerten jeweils Objektpositionen zuzuordnen und dann die für eine real gegebene Objektposition gelieferten Empfangssignale nur mit denjenigen Referenzwerten zu vergleichen, die der momentan real gegebenen Objektposition entsprechen. Somit wird es möglich, zulässige, nicht zu einem Abschalten einer Maschine bzw. zur Abgabe eines Steuersignals führende Objektbewegungen als positionsabhängige Referenzwerte einzulernen. Diese Objektbewegungen können von Vorgang zu Vorgang mit unterschiedlichen Geschwindigkeiten in beliebigen zeitlichen Abfolgen stattfinden, was im Praxiseinsatz der erfindungsgemäßen Lichtgitter zu erheblichen Vorteilen führt. Beispielsweise wird es möglich, zulässige Objekte mittels eines Förderbandes durch den Überwachungsbereich zu bewegen, wobei das Förderband von Objekt zu Objekt oder auch während des Passierens des Überwachungsbereichs durch ein einzelnes Objekt mit variierenden Geschwindigkeiten laufen kann. Zudem wird es möglich, den Transportvorgang bei Bedarf anzuhalten und anschließend wieder fortzusetzen oder den Transportvorgang in unterschiedliche Richtungen ablaufen zu lassen, ohne dass dies zu einem unbeabsichtigten Abschalten einer Maschine führt.

Es können also Objekte, die beim Eindringen in einen Überwachungsbereich keine Gefahren darstellen, von solchen Gegenständen oder Personen unterschieden werden, die beim Eindringen in den Überwachungsbereich Gefahren bedingen. Diese Unterscheidung erfolgt dabei unabhängig von der Geschwindigkeit bzw. der zeitlichen Abfolge der Bewegungen.

Der erfindungsgemäß eingesetzte Positionsgeber besteht aus einem mit einem Fördermittel zusammenwirkenden Weggeber, konkret einem Inkrementalgeber. Ein solcher Inkrementalgeber kann die Bewegungen eines Fördermittels exakt aufnehmen und den Bewegungen entsprechende Signale an die Auswerteeinheit übermitteln. Die vom Positionsgeber gelieferten Informationen können sowohl Wegstrecken als auch Bewegungsrichtungen umfassen. Wenn auch Informationen hinsichtlich der Bewegungsrichtung übermittelt werden, wird es erfindungsgemäß möglich, ein Fördermittel während des Transports eines zulässigen Objekts durch den Überwachungsbereich beispielsweise auch kurzzeitig rückwärts laufen zu lassen, um den Transportvorgang anschließend wieder fortzusetzen, ohne dass ein unerwünschtes Abschaltsignal ausgelöst wird. Zudem kann ein Positionsgeber auch noch eine Information hinsichtlich seiner einwandfreien Funktionsfähigkeit an die Auswerteeinheit übermitteln, was für manche Anwendungen im Sicherheitsbereich zwingend erforderlich ist.

Der Positionsgeber besitzt an die jeweiligen Anforderungen angepasste Auflösungen. Die Auflösung beträgt konkret weniger als 1 cm, insbesondere weniger als 1 mm und bevorzugt ungefähr 1/250 mm betragen.

Benachbarte Lichtstrahlen des erfindungsgemäßen Lichtgitters besitzen bevorzugt einen Abstand voneinander, welcher zwischen 10 mm und 80 mm beträgt. Dieser Abstand legt letztlich fest, mit wie vielen Lichtstrahlen ein Objekt an einer Objektposition abgetastet wird. Je mehr Lichtstrahlen hierfür verwendet werden, desto exakter lässt sich das Objekt in derjenigen Richtung bestimmen, welche parallel zur Längserstreckung der Sendeleiste und der Empfangsleiste verläuft.

Besonders vorteilhaft ist es, wenn die Sende- und/oder die Empfangsleiste mit einer Blende versehen werden, welche die Lichtstrahlen in einer senkrecht zur Überwachungsebene verlaufenden Richtung begrenzt. Durch eine solche Blende wird erreicht, dass die wirksame Breite, welche sich senkrecht zur Überwachungsebene erstreckt, begrenzt wird, wodurch sich die Auflösung bei der Erkennung von Objekten in der senkrecht zur Überwachungsebene verlaufenden Richtung erhöhen lässt. Durch diese Maßnahme kann dementsprechend sichergestellt werden, dass auch solche Objekte erkannt werden können, welche in einer Richtung senkrecht zur Überwachungsebene nur eine sehr geringe Ausdehnung besitzen.
Die Blende kann dabei als sich in Längsrichtung der Sende- und/oder Empfangsleiste erstreckende Schlitzblende, insbesondere mit einer Schlitzbreite zwischen 1 mm und 3 mm ausgebildet sein. Herstellungstechnisch besonders vorteilhaft ist es, wenn für alle Lichtstrahlen eine gemeinsame Schlitzblende vorgesehen ist, so dass sich der Schlitz über fast die gesamte Länge der Sende- und/oder Empfangsleiste erstreckt.

Die Sende- und/oder Empfangsleisten sind erfindungsgemäß in einem anderen Winkel als 90° zur Objektbewegung orientiert, beispielsweise zwischen 45° und 135°. Auf diese Weise bewirken senkrecht zur Förderrichtung verlaufende Kanten kein plötzliches Schalten einer Vielzahl von Empfängern der Empfangsleiste, sondern vielmehr ein sequentielles, kurz nacheinander erfolgendes Schalten dieser Empfänger. Hierdurch wird es erfindungsgemäß möglich, die genannten Kanten genauer zu erkennen.

Bevorzugt ist es, wenn die Auswerteeinheit in die Sende- und/oder Empfangsleiste integriert werden, so dass für die Auswerteeinheit kein zusätzliches Gehäuse benötigt wird.

Die Auswerteeinheit kann in doppelter, sich wechselseitig überprüfender Ausführung vorhanden sein, um auf diese Wiese bestehenden Sicherheitsanforderungen gerecht zu werden.

Bei einem erfindungsgemäßen Verfahren zum Betrieb eines Lichtgitters gemäß der vorstehenden Beschreibung wird im Speicher für vorgegebene Positionen des Objekts jeweils ein Referenzwert für bestimmte Lichtstrahlen, bevorzugt für jeden Lichtstrahl gespeichert. Konkret kann für jeden, sich zwischen Sende- und Empfangsleiste erstreckenden Lichtstrahl bezogen auf eine bestimmte Objektposition gespeichert werden, ob ein Lichtempfang vorliegen soll oder nicht. Letztlich existiert dann also für jede Objektposition eine Anzahl von Referenzwerten, die der Anzahl der vorhandenen Sende- bzw. Empfangsbausteine in der Sende- bzw. Empfangsleiste entspricht. Derartige Folgen von Referenzwerten können für eine Mehrzahl von Objektpositionen gespeichert werden, wobei es natürlich möglich ist, dass sich die gespeicherten Folgen in Abhängigkeit von der jeweiligen Objektform voneinander unterscheiden.

Bevorzugt ist es, wenn im Referenzspeicher für alle ermittelbaren Positionen des Objektes, bei denen sich zumindest ein Teil des Objekts im Überwachungsbereich befindet, jeweils ein Referenzwert für jeden Lichtstrahl gespeichert wird. Auf diese Weise lässt sich ein zulässiges Objekt mit der höchstmöglichen Genauigkeit ermitteln. Alternativ ist es auch möglich, lediglich für bestimmte Positionen des Objektes entweder Referenzwerte für jeden Lichtstrahl oder nur Referenzwerte für bestimmte Lichtstrahlen zu speichern. Dies ist beispielsweise dann sinnvoll, wenn keine besonders hohe Auflösung benötigt wird.

Bei Abweichung der auf eine Objektposition bezogenen Empfangssignale von den auf den genannten Objektpositionen bezogenen Referenzwerten kann ein Steuersignal erzeugt werden, welches beliebige Vorgänge, beispielsweise ein Abschalten einer Maschine, zur Folge haben kann. Um fehlerhafte Auslösungen eines Steuersignals, beispielsweise durch ein den Überwachungsbereich passierendes Insekt, zu vermeiden, kann vorgegeben werden, dass ein Steuersignal nur dann zu erzeugen ist, wenn bei mehreren, insbesondere zwei oder drei aufeinander folgenden Objektpositionen eine Abweichung zwischen den Empfangssignalen und den jeweils zughörigen Referenzwerten gegeben ist.

Weiterhin bevorzugt ist es, wenn das genannte Steuersignal nur dann erzeugt wird, wenn die Abweichung eine vorgegebene Toleranzschwelle überschreitet. Auf diese Weise lassen sich Fehlauslösungen des Steuersignals vermeiden.

Besonders vorteilhaft lässt sich die Erfindung dann einsetzen, wenn bei Übereinstimmung der auf eine Folge von Objektpositionen bezogenen Empfangssignale mit auf diese Objektpositionen bezogenen Referenzwerten ein Erkennungssignal erzeugt wird. Ein Erkennungssignal kann also dann abgegeben werden, wenn ein zulässiges Objekt den Überwachungsbereich passiert. Insbesondere wird es möglich, unterschiedliche zulässige Objekte, welche den Überwachungsbereich passieren, voneinander zu unterscheiden.
Letztgenannter Vorteil bedingt, dass im Speicher Referenzwerte für unterschiedliche zulässige Objekte und/oder unterschiedliche zulässige Objektbewegungen abgelegt werden können.

Die Referenzwerte werden auf vorteilhafte Art und Weise mittels eines Teach-in-Vorgangs ermittelt. Hierfür kann am erfindungsgemäßen Lichtgitter ein entsprechender Taster vorgesehen sein, welcher einen Teach-in-Modus aktiviert. Im Rahmen des Teach-in-Vorgangs kann dann das einzulernende zulässige Objekt bevorzugt mit geringer Geschwindigkeit durch den Überwachungsbereich bewegt werden. Dabei können dann entweder für alle ermittelbaren Objektpositionen Referenzwerte bestimmt werden oder es werden beispielsweise mittels eines Tasters bestimmten Objektpositionen entsprechende Teach-Punkte festgelegt, für die Referenzwerte zu speichern sind. Solche Teach-Punkte werden bevorzugt gesetzt am Anfang und am Ende von Objekten und Öffnungen in Objekten sowie kurz vor und kurz nach steilen Kanten eines Objektes und bei großen Steigungsänderungen der Objektform. Weitere Referenzwerte, die zwischen den Teach-Punkten liegen, werden aus den Teach-Punkten berechnet, beispielsweise mittels linearer Interpolation.
Nach Abschluss eines Teach-in-Vorgangs kann dann in den Normalbetrieb umgeschaltet werden, in welchem das Passieren des Überwachungsbereichs durch ein zuvor eingelerntes Objekt keine Auslösung eines Steuersignals bewirkt. Stattdessen kann das vorstehend bereits erläuterte Erkennungssignal abgegeben werden.

Weitere vorteilhafte Ausführungsformen der Erfindung sind in den Unteransprüchen beschrieben.

Die Erfindung wird nachfolgend unter Bezugnahme auf die Zeichnungen erläutert; in diesen zeigen:
- Fig. 1: eine schematische Perspektivansicht eines erfindungsgemäßen Lichtgitters,

- Fig. 2: eine Seitenansicht des Lichtgitters gemäß Fig. 1 mit einem im Überwachungsbereich befindlichen Objekt,
- Fig. 3: ein Blockschaltbild der erfindungsgemäßen zusammenwirkenden Speicher-, Auswerte- und Positionsgeberbausteine, und
- Fig. 4: die schematische Draufsicht auf die Lichtaustrittsseite einer bevorzugten Ausführungsform einer erfindungsgemäß zum Einsatz gelangenden Sendeleiste.

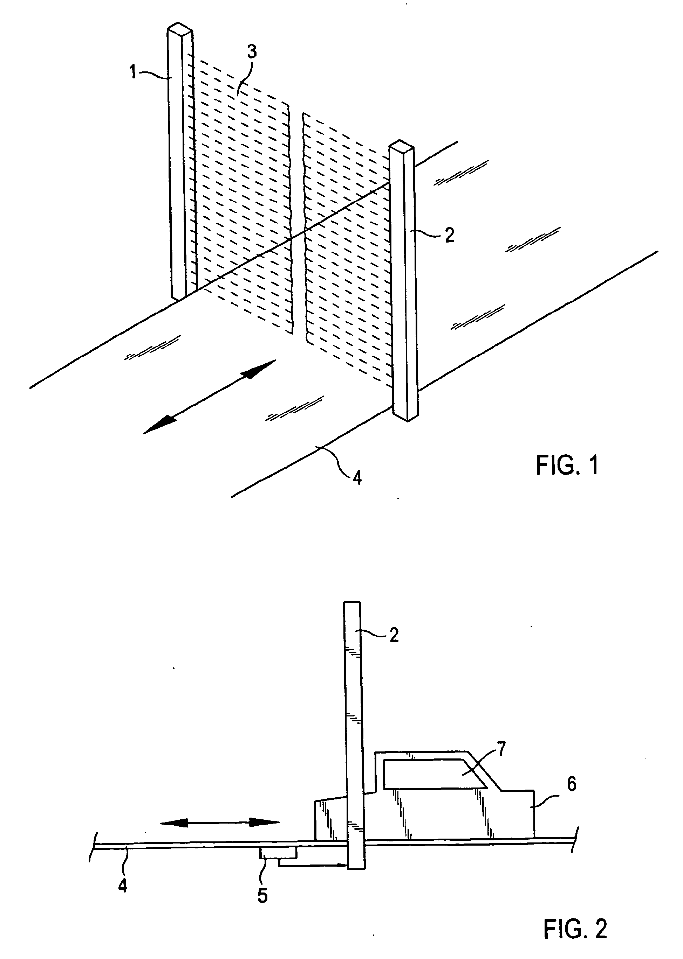

Fig. 1 zeigt eine Sendeleiste 1 sowie eine dieser gegenüber angeordnete Empfangsleiste 2, welche jeweils eine lang gestreckte Form aufweisen. Längs der Sendeleiste 1 sind eine Vielzahl von nebeneinander angeordneten, in Fig. 1 nicht dargestellten Sendebausteinen vorgesehen, wobei jedem Sendebaustein in der Empfangsleiste 2 ein entsprechender Empfangsbaustein zugeordnet ist, so dass Lichtstrahlen 3 von den Sendebausteinen der Sendeleiste 1 ausgesandt und von den Empfangsbausteinen der Empfangsleiste 2 empfangen werden können. Diese Lichtstrahlen 3 können in bekannter Art und Weise codiert sein, um auf diese Weise Fehlfunktionen zu vermeiden. Die Synchronisation zwischen Sendeleiste 1 und Empfangsleiste 2 kann ebenfalls in beliebiger, bekannter Weise erfolgen, wobei hier sowohl eine drahtgebundene als auch eine drahtlose Synchronisation möglich ist.

Die sich zwischen Sendeleiste 1 und Empfangsleiste erstreckende Fläche stellt die Überwachungsebene des aus Sendeleiste 1 und Empfangsleiste 2 bestehenden Lichtgitters dar. Innerhalb dieser Überwachungsebene erstrecken sich die parallel zueinander verlaufenden Lichtstrahlen 3.

Das dargestellte Lichtgitter 1, 2 ist dazu in der Lage, festzustellen, wenn einzelne oder mehrere Lichtstrahlen 3 durch ein Objekt oder eine Person unterbrochen werden, woraufhin dann durch das Lichtgitter 1, 2 entsprechende Steuersignale ausgegeben werden können.

Gemäß Fig. 1 erstreckt sich unterhalb des Lichtgitters 1, 2 ein Förderband 4, welches Objekte durch den Überwachungsbereich des Lichtgitters 1, 2 transportieren kann. Es sind dabei zwei Förderrichtungen entsprechend dem eingezeichneten Doppelpfeil möglich.

Fig. 2 zeigt eine Seitenansicht der Vorrichtung gemäß Fig. 1.

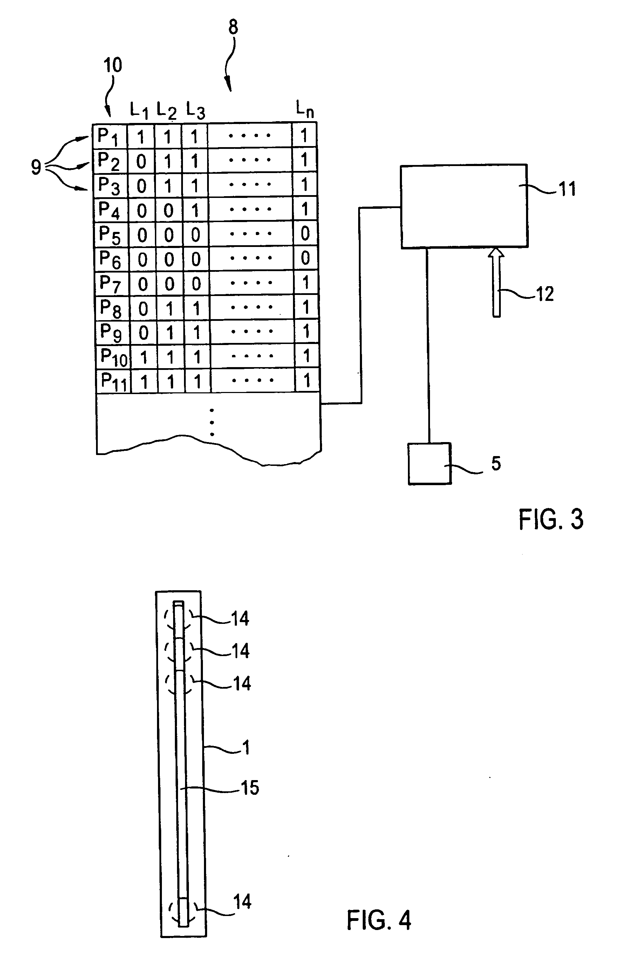

Aus Fig. 2 ist ersichtlich, dass das Förderband mit einem Positionsgeber gekoppelt ist, welcher dazu in der Lage ist, Bewegungen des Förderbands 4 in beide Richtungen zu ermitteln, und entsprechende Informationen an die Empfangsleiste 2 zu übermitteln, in welcher eine erfindungsgemäß arbeitende Auswerteeinheit (nicht dargestellt) vorgesehen ist. Hinsichtlich der Arbeitsweise der Auswerteeinheit wird auf die nachfolgenden Erläuterungen zur Fig. 3 verwiesen.

Auf dem Förderband 4 befindet sich ein Objekt 6, in der beispielhaften Darstellung gemäß Fig. 2 eine Karosserie eines Fahrzeugs. Diese Karosserie 6 ist in ihrem für die Fenster vorgesehenen Bereich 7 naturgemäß lichtdurchlässig ausgebildet. Dementsprechend wird die Empfangsleiste 2 dann, wenn sich der lichtdurchlässige Bereich 7 in der Überwachungsebene befindet, Lichtstrahlen 3 empfangen, die durch den lichtdurchlässigen Bereich 7 hindurchtreten. Wenn nun der Karosserie 6 entsprechende Referenzwerte gespeichert sind, welche die Karosserie 6 mit ihrem lichtdurchlässigen Bereich 7 als zulässiges Objekt definieren, wird von der erfindungsgemäßen Vorrichtung kein Steuersignal ausgelöst, wenn sich die Karosserie 6 durch die Überwachungsebene bewegt. Sollte sich dabei jedoch eine Person innerhalb der Karosserie befinden, welche einen Empfang der durch den lichtdurchlässigen Bereich 7 hindurchtretenden Lichtstrahlen zumindest teilweise verhindert, weichen die Empfangssignale der Empfangsleiste 2 von den gespeicherten Referenzwerten ab, so dass ein Steuersignal ausgegeben wird. Dementsprechend können mit der erfindungsgemäßen Vorrichtung nicht nur Außenkonturen sondern auch beliebig komplexe Strukturen als zulässige Objekte eingelernt werden, welche beliebige Anordnungen von lichtdurchlässigen und lichtundurchlässigen Bereichen aufweisen.

Fig. 3 zeigt einen erfindungsgemäß zum Einsatz gelangenden Speicher, in welchem Referenzwerte und diesen zugeordnete Positionsinformationen abgelegt werden können. Der in Fig. 3 beispielhaft dargestellte Speicher 8 besitzt eine Vielzahl von Zeilen 9, wobei jeweils eine Zeile einer bestimmten Objektposition Pᵢ entspricht. Die erste Stelle der Zeile 9 beinhaltet jeweils die Positionsinformation Pᵢ, so dass sich eine Spalte 10 mit Positionsinformationen Pᵢ ergibt. Die nachfolgenden Stellen der Zeilen 9 weisen dann jeweils Referenzwerte auf, welche der jeweiligen Objektposition Pᵢ zugeordnet sind. Die Anzahl n der Referenzwerte entspricht dabei der Anzahl n der Lichtstrahlen L₁ - Lₙ, die sich zwischen Sendeleiste 1 und Empfangsleiste 2 erstrecken. Für jeden Lichtstrahl Lⱼ ist somit für jede Position Pᵢ eines zulässigen Objekts gespeichert, ob der dem jeweiligen Lichtstrahl Lⱼ zugeordnete Empfangsbaustein Licht empfängt oder nicht. Im Falle eines vorhandenen Lichtempfangs ist der Referenzwert mit "1" belegt, im anderen Fall ist er mit "0" belegt.

Im Speicher 8 können nicht nur die Referenzwerte für den Durchtritt eines bestimmten zulässigen Objekts durch den Überwachungsbereich gespeichert werden. Vielmehr sind Referenzwerte und Positionsinformationen für mehrere unterschiedliche zulässige Objekte bzw. zulässige Objektbewegungen speicherbar.

Die Auswerteeinheit 11 ist dazu in der Lage, auf die Werte des Speichers 8 zuzugreifen und diese zu verarbeiten. Im Rahmen dieser Verarbeitung wird auf die vom Positionsgeber 5 gelieferten Werte und die über den Eingang 12 erhaltenen Empfangssignale der Empfangsleiste 2 zugegriffen. Wie bereits erläutert, wird im Rahmen dieser Verarbeitung festgestellt, ob die Empfangssignale für eine bestimmte, mittels des Positionsgebers 5 ermittelte Objektposition mit den für diese Objektposition gespeicherten Referenzwerten des Speichers 8 übereinstimmen. Bei Übereinstimmung kann dann von der Auswerteeinheit 11 die Ausgabe eines Steuersignals, beispielsweise zum Abschalten einer Maschine, unterdrückt und die Abgabe eines Erkennungssignals für ein zulässiges Objekt ausgelöst werden.

Fig. 4 zeigt eine bevorzugte Ausführungsform einer Sendeleiste 1, wobei hier die Draufsicht auf die Lichtaustrittsseite der Sendeleiste 1 dargestellt ist.

Die Sendeleiste 1 besitzt eine Vielzahl n von nebeneinander angeordneten Sendebausteinen, welche durch eine gemeinsame Schlitzblende 15 abgedeckt sind. Auf diese Weise ergibt sich eine Begrenzung der ausgesandten Lichtstrahlen in einer Richtung senkrecht zur Überwachungsebene, wodurch sich die eingangs bereits erläuterten Vorteile ergeben.

### Bezugszeichenliste

- 1: Sendeleiste
- 2: Empfangsleiste
- 3: Lichtstrahlen
- 4: Förderband
- 5: Positionsgeber
- 6: Objekt
- 7: lichtdurchlässiger Bereich
- 8: Speicher
- 9: Zeilen
- 10: Spalte
- 11: Auswerteeinheit
- 12: Empfangssignal
- 14: Empfangsbausteine
- 15: Schlitzblende

## Patentansprüche

1. Anordnung mit einem Fördfermittel und einem Lichtgitter mit einer Sendeleiste (1) zum Aussenden einer Mehrzahl von Lichtstrahlen (3) und einer Empfangsleiste (2) zum Empfang dieser Lichtstrahlen (3), einer Auswerteeinheit (11) zur Verarbeitung von in Abhängigkeit von den empfangenen Lichtstrahlen (3) erzeugten Empfangssignalen, einem Speicher (8) für Referenzwerte, die mittels der Auswerteeinheit (11) mit den Empfangssignalen vergleichbar sind, wobei ein Positionsgeber (5) zur Ermittlung der Position eines in den Überwachungsbereich des Lichtgitters (12) eingeführten Objekts (6) vorgesehen ist, die Auswerteeinheit (11) mit den vom Positionsgeber (5) gelieferten Positionssignalen beaufschlagbar ist und der Vergleich der Referenzwerte mit den Empfangssignalen in Abhängigkeit von den Positionssignalen durchführbar ist,
**dadurch gekennzeichnet,**
**dass** der Positionsgeber (5) aus einem mit einem Fördermittel (4) zusammenwirkenden Inkrementalgeber besteht,
**dass** mittels des Positionsgebers (5) die Position des Objekts (6) mit einer Auflösung von weniger als 1 cm, insbesondere von weniger als 1 mm und bevorzugt mit ungefähr 1/250 mm bestimmbar ist, und dass sich Sende- und/ oder Empfangsleisten (1, 2) in einem Winkel zwischen 45° und 135°, nicht aber in einem Winkel von 90° zur durch das Fördfermittel erzeugten Objektbewegung erstrecken.

2. Anordnung nach Anspruch 1,
**dadurch gekennzeichnet,**
**dass** mittels des Positionsgebers (5) Objektbewegungen in entgegengesetzte Richtungen ermittelbar sind

3. Anordnung nach einem der vorhergehenden Ansprüche,
**dadurch gekennzeichnet,**
**dass** benachbarte Lichtstrahlen (3) einen Abstand zwischen 10 und 80 mm voneinander besitzen.

4. Anordnung nach einem der vorhergehenden Ansprüche,
**dadurch gekennzeichnet,**
**dass** die Sende- und/oder die Empfangsleiste (1, 2) mit einer Blende (15) versehen ist, welche die Lichtstrahlen (3) in einer senkrecht zur Überwachungsebene verlaufenden Richtung begrenzt,
wobei die Blende vorzugsweise als (15) sich in Längsrichtung der Sende- und/oder Empfangsleiste erstreckende Schlitzblende, insbesondere mit einer Schlitzbreite zwischen 1 und 3 mm, ausgebildet ist,
und/oder
wobei vorzugsweise für alle Lichtstrahlen (3) eine gemeinsame Schlitzblende (15) vorgesehen ist.

5. Anordnung nach einem der vorhergehenden Ansprüche,
**dadurch gekennzeichnet,**
**dass** die Auswerteeinheit (11) in die Sende- und/oder Empfangsleiste (1, 2) integriert ist,
und/oder
**dass** die Auswerteeinheit (11) in doppelter, sich wechselseitig überprüfender Ausführung vorhanden ist.

6. Verfahren zum Betrieb eine Anordnung nach einem der vorhergehenden Ansprüche,
**dadurch gekennzeichnet,**
**dass** im Speicher (8) für vorgegebene Positionen des Objekts (6) jeweils ein Referenzwert für bestimmte Lichtstrahlen (3), bevorzugt für jeden Lichtstrahl (3) gespeichert wird.

7. Verfahren nach Anspruch 6,
**dadurch gekennzeichnet,**
**dass** im Speicher (8) für alle ermittelbaren Positionen des Objekts (6), bei denen sich ein Teil des Objekts (6) im Überwachungsbereich befindet, jeweils ein Referenzwert für jeden Lichtstrahl (3) gespeichert wird,
und/oder
**dass** im Speicher (8) Referenzwerte für unterschiedliche Objekte (6) und/oder unterschiedliche Objektbewegungen abgelegt werden.

8. Verfahren nach einem der Ansprüche 6 oder 7,
**dadurch gekennzeichnet,**
**dass** bei Abweichung der auf eine Objektposition bezogenen Empfangssignale von den auf die genannte Objektposition bezogenen Referenzwerten ein Steuersignal erzeugt wird.

9. Verfahren nach einem der Ansprüche 6 bis 8,
**dadurch gekennzeichnet,**
**dass** ein Steuersignal nur dann erzeugt wird, wenn bei mehreren, insbesondere zwei oder drei aufeinander folgenden Objektpositionen eine Abweichung festgestellt wird,
und/oder
**dass** ein Steuersignal nur dann erzeugt wird, wenn die Abweichung eine vorgegebene Toleranzschwelle überschreitet.

10. Verfahren nach einem der Ansprüche 6 bis 9,
**dadurch gekennzeichnet,**
**dass** bei Übereinstimmung der auf eine Folge von Objektpositionen bezogenen Empfangssignale mit auf diese Objektpositionen bezogenen Referenzwerten ein Erkennungssignal erzeugt wird.

11. Verfahren nach einem der Ansprüche 6 bis 10,
**dadurch gekennzeichnet,**
**dass** die Referenzwerte im Teach-in-Modus ermittelt werden.

## Claims

1. A light grid for arrangement at a conveying means which is designed for the introduction of objects into a monitored zone of the light grid, having a transmitter strip (1) for the transmission of a plurality of light beams (3) and a receiver strip (2) for the reception of these light beams (3); an evaluation unit (11) for the processing of received signals generated in dependence on the light beams (3) received; and a memory (8) for reference values which can be compared with the received signals by means of the evaluation unit (11), wherein a position transducer (5) is provided for the determination of the position of an object (6) introduced into the monitored zone of the light grid (12), wherein the evaluation unit (11) can be supplied with the position signals delivered by the position transducer (5), and wherein the comparison of the reference values with the received signals can be carried out in dependence on the position signals,
**characterized in that**
the position transducer (5)comprises an increment generator cooperating with the conveying means (4); **in that** the position of the object (6) can be determined with a resolution of less than 1 cm, in particular of less than 1 mm and preferably at approximately 1/250 mm, by means of the position transducer (5); and **in that** transmitter strip and/or receiver strip (1, 2) extend at an angle between 45° and 135°, but not at an angle of 90°, to the object movement generated by the conveying means.

2. A light grid in accordance with claim 1, **characterized in that** object movements in opposite directions can be determined by means of the position transducer (5).

3. A light grid in accordance with one of the preceding claims, **characterized in that** adjacent light beams (3) have a spacing from one another of between 10 and 80 mm.

4. A light grid in accordance with any one of the preceding claims, **characterized in that** the transmitter strip and/ or receiver strip (1, 2) is provided with a diaphragm (15) which limits the light beams (3) in a direction extending perpendicular to the monitored plane, with the diaphragm (15) preferably being made as a slit diaphragm, in particular with a slit width between 1 mm and 3 mm, extending in the longitudinal direction of the transmitter strip and/or of the receiver strip, and/or with a common slit diaphragm (15) preferably being provided for all light beams (3).

5. A light grid in accordance with any one of the preceding claims, **characterized in that** the evaluation unit (11) is integrated into the transmitter strip and/or receiver strip (1, 2); and/or **in that** the evaluation unit (11) is present in duplicate, each checking the other.

6. A method for the operation of a light grid (1, 2) in accordance with any one of the preceding claims, **characterized in that** a respective reference value is stored in the memory (8) for preset positions of the object (6) for specific light beams (3), preferably for each light beam (3).

7. A method in accordance with claim 6, **characterized in that** a respective reference value is stored in the memory (8) for each light beam (3) for all positions of the object (6) which can be determined and for which part of the object (6) is located in the monitored zone; and/or **in that** reference values for different objects (6) and/or for different object movements are stored in the memory (8).

8. A method in accordance with one of the claims 6 or 7, **characterized in that** a control signal is generated when the received signals with respect to an object position differ from the reference values with respect to the said object position.

9. A method in accordance with any one of the claims 6 to 8, **characterized in that** a control signal is only generated when a difference is found for a plurality of object positions, in particular for two or three object positions, following one another; and/or **in that** a control signal is only generated when the difference exceeds a preset tolerance threshold.

10. A method in accordance with any one of the claims 6 to 10, **characterized in that** a recognition signal is generated on agreement of the received signals with respect to a sequence of object positions with reference values with respect to these object positions.

11. A method in accordance with any one of the claims 6 to 10, **characterized in that** the reference values are determined in the teach-in mode.

## Revendications

1. Grille lumineuse destinée à être agencée sur des moyens de convoyage qui sont conçus pour introduire des objets dans la zone de surveillance de la grille lumineuse, comprenant une ligne d'émission (1) pour émettre une pluralité de rayons lumineux (3) et une ligne de réception (2) pour recevoir ces rayons lumineux (3), une unité d'évaluation (11) pour traiter des signaux de réception engendrés en fonction des rayons lumineux reçus (3), une mémoire (8) pour des valeurs de référence, qui peuvent être comparées au moyen de l'unité d'évaluation (11) avec les signaux de réception, dans laquelle il est prévu un capteur de position (5) pour déterminer la position d'un objet (6) introduit dans la zone de surveillance de la grille lumineuse (12), l'unité d'évaluation (11) pouvant être alimentée avec les signaux de position fournis par le capteur de position (5), et la comparaison des valeurs de référence avec les signaux de réception peut être exécutée en fonction des signaux de position,
**caractérisée en ce que**
le capteur de position (5) consiste en un capteur incrémental qui coopère avec les moyens de convoyage (4),
la position de l'objet (6) peut être déterminée au moyen du capteur de position (5) avec une résolution inférieure à 1 cm, en particulier inférieure à 1 mm et de préférence environ 1/250 mm, et
la ligne d'émission et/ou la ligne de réception (1, 2) s'étendent sous un angle entre 45° et 135°, mais non pas sous un angle de 90° par rapport au mouvement des objets produit par les moyens de convoyage.

2. Grille lumineuse selon la revendication 1,
**caractérisée en ce que** des mouvements des objets dans des directions opposées peuvent être déterminés au moyen du capteur de position (5).

3. Grille lumineuse selon l'une des revendications précédentes,
**caractérisée en ce que** des rayons lumineux voisins (3) possèdent une distance entre 10 et 80 mm les uns par rapport aux autres.

4. Grille lumineuse selon l'une des revendications précédentes,
**caractérisée en ce que**
la ligne d'émission et/ou la ligne de réception (1, 2) sont pourvues d'un diaphragme (15) qui limite les rayons lumineux (3) dans une direction perpendiculaire au plan de surveillance,
le diaphragme (15) est réalisé de préférence sous forme d'un diaphragme en fente qui s'étend dans la direction longitudinale de la ligne d'émission et/ou la ligne de réception, en particulier avec une largeur de fente entre 1 mm et 3 mm,
et/ou il est prévu de préférence un diaphragme en fente (15) commun pour tous les rayons lumineux (3).

5. Grille lumineuse selon l'une des revendications précédentes,
**caractérisée en ce que**
l'unité d'évaluation (11) est intégrée dans la ligne d'émission et/ou dans la ligne de réception (1, 2), et/ou
l'unité d'évaluation (11) est prévue de réalisation double, qui se contrôlent réciproquement.

6. Procédé pour le fonctionnement d'une grille lumineuse 1, 2 selon l'une des revendications précédentes,
**caractérisé en ce que** l'on mémorise dans la mémoire (8) une valeur de référence respective, pour des positions prédéterminées de l'objet (6), pour certains rayons lumineux (3), de préférence pour chaque rayon lumineux (3).

7. Procédé selon la revendication 6,
**caractérisé en ce que**
on mémorise dans la mémoire (8) une valeur de référence respective pour chaque rayon lumineux (3), pour toutes les positions déterminables de l'objet (6) pour lesquelles une partie de l'objet (6) se trouve dans la zone de surveillance,
et/ou
on dépose en mémoire (8) des valeurs de référence pour des objets différents (6) et/ou pour des mouvements différents d'objets.

8. Procédé selon l'une des revendications 6 ou 7,
**caractérisé en ce que** lors d'un écart des signaux de réception qui se réfèrent à une position objet par rapport aux valeurs de référence qui se réfèrent à la position objet précitée, on engendre un signal de commande.

9. Procédé selon l'une des revendications 6 à 8,
**caractérisé en ce que**
on engendre un signal de commande uniquement si l'on constate un écart pour plusieurs positions objet, en particulier deux ou trois positions objet qui se suivent mutuellement,
et/ou
on engendre un signal de commande uniquement si l'écart dépasse une valeur de tolérance prédéterminée.

10. Procédé selon l'une des revendications 6 à 9,
**caractérisé en ce que**, en cas de coïncidence des signaux de réception qui se réfèrent à une succession de positions objet, on engendre un signal de reconnaissance avec des valeurs de référence qui se réfèrent à ces positions objet.

11. Procédé selon l'une des revendications 6 à 10,
**caractérisé en ce que** les valeurs de référence sont déterminées dans un mode d'apprentissage.
